Europäisches Patentamt

European Patent Office (11) Publication number: **0 207 682**

Office européen des brevets **B1**

(19)

(12) **EUROPEAN PATENT SPECIFICATION**

(45) Date of publication of patent specification : 30.08.89

(51) Int. Cl.⁴ : **B 61 D 17/20**

(21) Application number : 86304668.6

(22) Date of filing : 17.06.86

(54) Gangway footplate apparatus for interconnecting passageway between cars.

(30) Priority : 19.06.85 JP 93479/85 U

(43) Date of publication of application : 07.01.87 Bulletin 87/02

(45) Publication of the grant of the patent : 30.08.89 Bulletin 89/35

(84) Designated contracting states : DE FR GB

(56) References cited :
DE–C– 518 414
DE–C– 913 294
GB–A– 2 063 802
US–A– 3 399 632

(73) Proprietor : Narita Seisakusho Mfg., Ltd.
12, Takocho-1-chome
Mizuho-ku Nagoya (JP)

(72) Inventor : Ando, Rokuro
21 Higashiayamamotomachi-1-chome
Chikusa-ku Nagoya (JP)
Inventor : Ishikawa, Minoru
536-6, Oaza Imaichiba
Konan-shi (JP)

(74) Representative : Nettleton, John Victor et al
Abel & Imray Northumberland House 303-306 High Holborn
London, WC1V 7LH (GB)

## Description

### Background of the Invention

#### Field of the Invention

The present invention relates to a gangway footplate apparatus for a interconnecting passageway between cars.

#### Description of the Prior Art

Heretofore, as a gangway apparatus provided in a interconnecting passageway between coupled cars, there is known one which has a split arrangement provided with a first gangway footplate member having a proximal portion connected to one car and a second gangway footplate member having a proximal portion connected to the other car and a front portion overlapping with the front portion of the first gangway footplate member, each gangway footplate member being formed of a single plate.

In the aforementioned conventional gangway footplate apparatus, it favorably follows up the passing of the cars along a curved track as well as pitching. However, when one gangway footplate member is inclined by following up the cars during the rolling of the cars, there is a problem in that a gap between the overlapping portions of the two gangway footplate members on the lowered side thereof becomes wide open, thereby presenting the danger of a foot of a passenger stepping on the gangway foot plate member becoming caught by the opening.

GB-A-2 063 802 describes a passageway system between two railway vehicle boxes such as defined in the preamble of claim 1. The passageway system comprises two separable portals, each of which has a bridge plate which is pivotably attached in the manner of a hinge at one threshold of an end face opening of the vehicle box where it pivots about a transverse axis. Rotatably disposed about a transverse axis are bridge members attached to a threshold of a portal end frame and the bridge members glidingly lie on the bridge plate attached to the vehicle box to form a walkway. The bridge members consist of individual adjacent elements which permit adaptation to motions in use.

#### Summary of the Invention

Accordingly, the object of the present invention is to provide a gangway foot plate apparatus for an interconnecting passageway between cars which prevents the overlapping portions of the two gangway footplates from becoming wide open even during the rolling of the cars, thereby overcoming the drawback of the conventional apparatus.

To this end, according to the present invention, there is provided a gangway footplate apparatus disposed in an interconnecting passageway formed between coupled cars, comprising : a first gangway footplate member including a single plate having a proximal portion which is coupled with one car body of the car bodies such as to be vertically rotatable, the first gangway footplate member being maintained substantially horizontally during normal operation ; and a second gangway foot plate member having a proximal portion coupled with the other car body such as to be vertically rotatable and a front portion superposed on the front portion of the first gangway footplate member, characterised in that the second gangway footplate member includes a base plate having the proximal portion and a front edge portion, the front edge portion having a central portion and inclined portions on both sides thereof extending from the vicinity of the central portion laterally and toward the proximal portion, and a pair of gap closing plates each having one end connected to the inclined portion of the base plate such as to be vertically rotatable, the gap closing plates being superposed on the front portion of the first gangway footplate member.

Other objects, features, and advantages of the present invention will become apparent from the description of the preferred embodiment when read in conjunction with the accompanying drawings.

#### Brief Description of the Drawings

Fig. 1 is a top plan view illustrating a gangway footplate apparatus for an interconnecting passageway between cars according to the present invention ;

Fig. 2 is a schematic front elevational view illustrating the state of the gangway footplate apparatus during the traveling of cars ;

Fig. 3 is a schematic cross-sectional view taken in the direction of a line III-III in Fig. 1 and illustrates the state of the gangway footplate apparatus during the traveling of the cars ;

Fig. 4 is a side cross-sectional view of a car-side gangway footplate member ;

Fig. 5 is a cross-sectional view of the central portion of a vestibule diaphragm-side gangway footplate member,

Fig. 6 is a side cross-sectional view of a gap closing plate ;

Fig. 7 is an enlarged cross-sectional view taken along a line VII-VII in Fig. 1 ;

Fig. 8 is an enlarged cross-sectional view illustrating the details of the righthand portion of the gangway footplate member shown in Fig. 3 ;

Fig. 9 is a top plan view illustrating the relationship among the two cars, the vestibule diaphragm structures, and the gangway footplate members ;

Fig. 10 is a top plan view illustrating a conventional gangway footplate apparatus ; and

Fig. 11 is a front elevational view illustrating the state of the conventional gangway apparatus during the traveling of the cars.

Detailed Description of the Preferred Embodiment

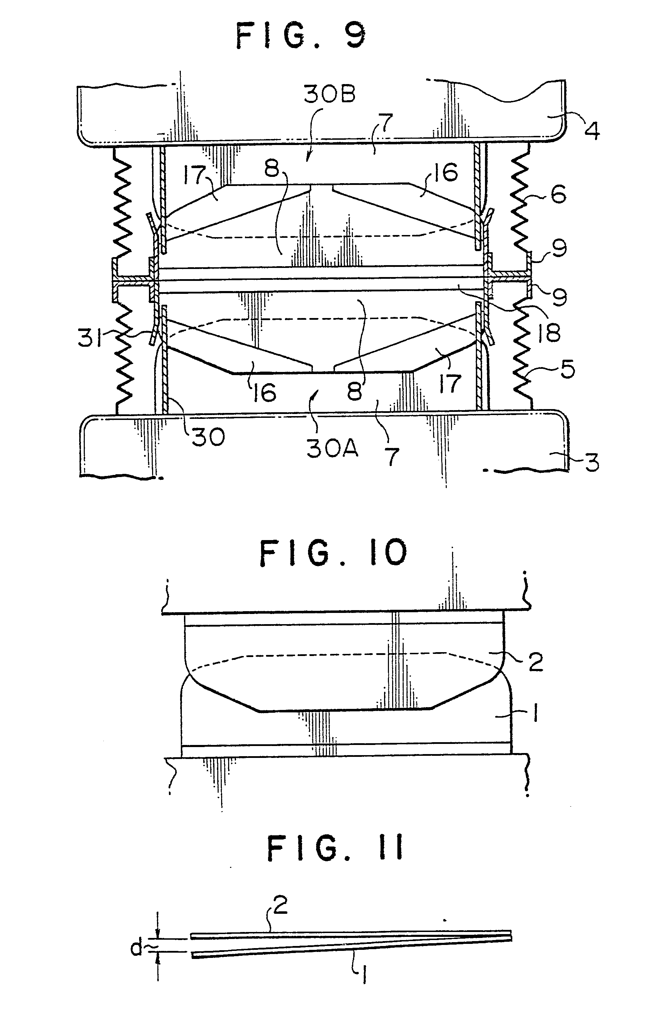

Figs. 10 and 11 show a conventional gangway footplate apparatus. This gangway footplate apparatus has a split arrangement provided with a first gangway footplate member 1 having a proximal portion connected to one car and a second gangway footplate member 2 having a proximal portion connected to the other car and a front portion overlapping with the front portion of the first gangway footplate member. In addition, each of the gangway footplate members 1 and 2 is formed of a single plate. In such a gangway footplate apparatus, it favorably follows up the passing of the cars along a curved track as well as pitching. However, when one gangway footplate member 1 is inclined by following up the cars during the rolling of the cars, as shown in Fig. 11, there is a problem in that a gap d between the overlapping portions of the two gangway footplate members 1 and 2 on the lowered side thereof becomes wide open, thereby creating the danger of a foot of a passenger stepping on the gangway footplate member becoming caught.

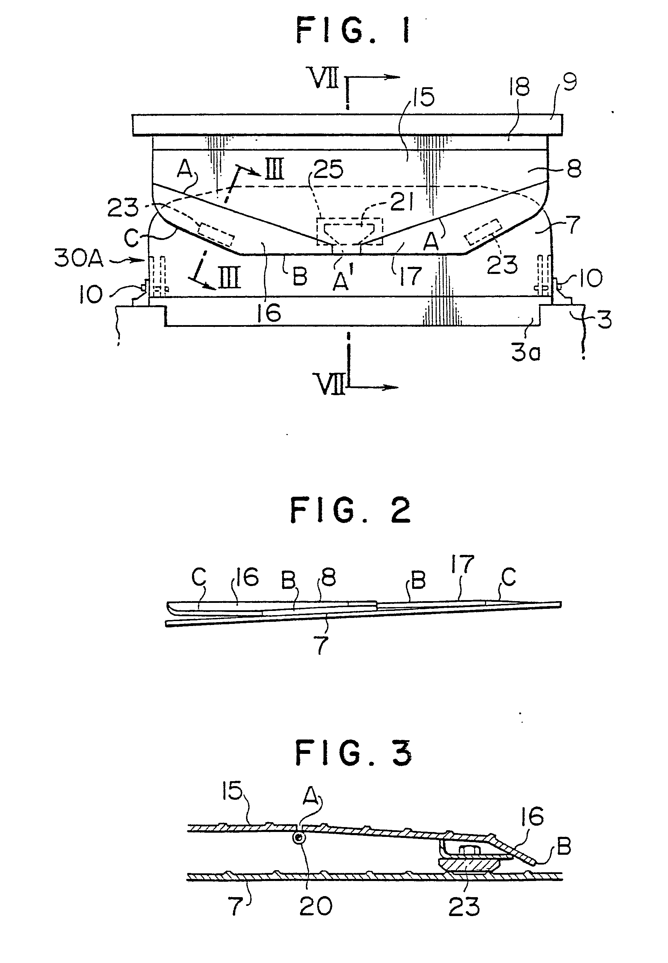

Figs. 1 to 9 show a gangway footplate apparatus according to an embodiment of the present invention which overcomes the drawback of the aforementioned conventional apparatus. In the illustrated embodiment, as shown in Fig. 9, a vestibule diaphragm device covering a interconnecting passageway between cars 3, 4. This vestibule diaphragm device includes a first vestibule diaphragm structure 5 having one end connected to one car body 3 as well as a second vestibule diaphragm structure 6 having one end connected to the other car body 4 and the other end connected to the other end of the first vestibule diaphragm structure at the time of coupling of the two cars. The gangway footplate apparatus is provided in the interconnecting passageway thus covered with this vestibule diaphragm device. The proximal portion of a first gangway footplate member 7 of a gangway footplate apparatus 30A located in the lower position in Fig. 9 is coupled with the side of the car body 3, while the proximal portion of a second gangway footplate member 8 is connected to a metal frame 9 provided at the aforementioned other end, i. e., the free end, of the first vestibule diaphragm structure 5. Accordingly, the second gagway footplate member 8 is coupled with the other car 4 via the vestibule diaphragm structures 5, 6. Similarly, the proximal portion of the first gangway footplate member 7 in an upper gangway footplate apparatus 30B shown in Fig. 9 is coupled with the side of the car body 4, and the proximal portion of the second gangway footplate member 8 is coupled with the metal frame 9 provided at the free end of the second vestibule diaphragm device 6, so that the second gangway footplate member 8 is coupled with the car body 3 via the vestibule diaphragm structures 5, 6. Further description will be made hereinunder of the gangway footplate apparatus. Incidentally,

since the gangway footplate apparatuses 30A and 30B are similar, the following description will be made with respect to the gangway footplate apparatus 30A alone.

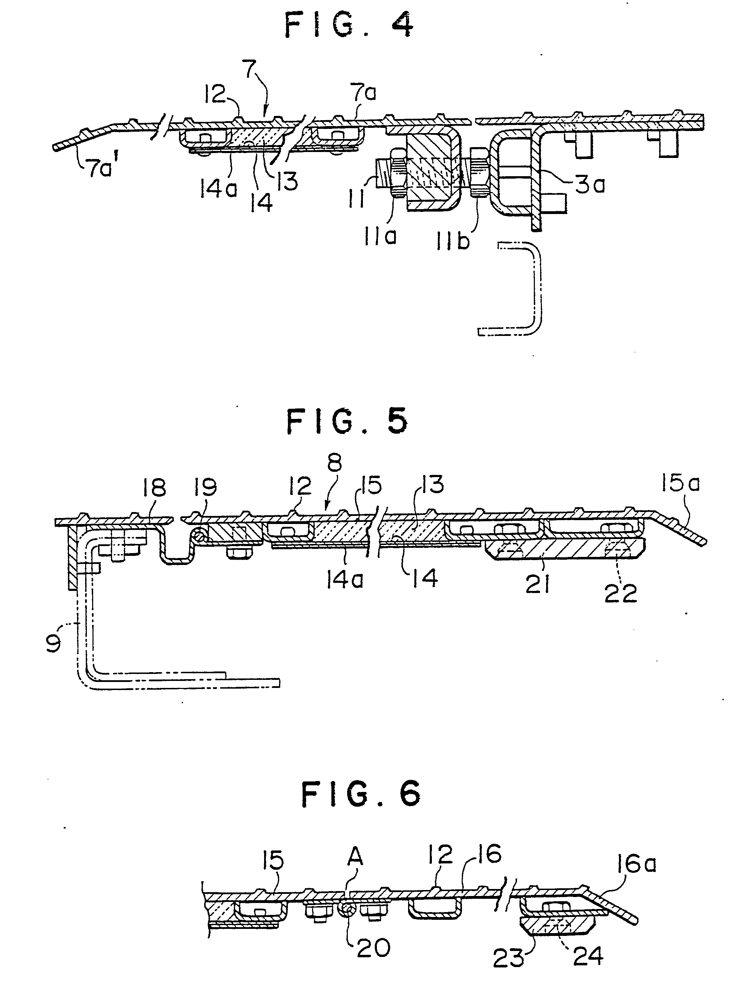

In Fig. 1, the first gangway footplate member, i. e., the car-side gangway footplate member 7, is coupled with the side of the car body 3, while the second gangway footplate member, i. e., the vestibule diaphragm-side gangway footplate member 8, is coupled with the free end-side metal frame 9 of the aforementioned vestibule diaphragm structure 5. The car-side gangway vestibule diaphragm member 7 has a single plate 7a (Fig. 4), the proximal portion of which is coupled with the side of the car body 3 via a horizontal rotary shaft 10 such as to be vertically rotatable. The proximal portion of the gangway footplate member 7 may be directly coupled with the side of the car body 3 per se, or may be installed on the car-side metal frame 3a of the vestibule diaphragm structure 5, which is secured to the car body 3 and is integral with the car body 3. With respect to the gangway footplate member 7, its horizontal position is restricted as the tip of an adjusting bolt 11 (Fig. 4) disposed at the lower portion on the side of a base is made to abut the car-side metal frame 3a. In addition, the horizontal angle of the gangway footplate member 7 is adjustable as the state of abutting between the head 11b of the bolt 11 and the metal frame 3a is adjusted by rotating a nut 11a engaging with the adjusting bolt 11. Furthermore, the plate 7a of the car-side gangway footplate member 7 is formed of a stainless steel plate. Striped projections 12 for preventing slippage are formed on the surface of the plate 7a. The plate 7a has a heat insulating material 13 such as glass wool on the rear surface thereof, and a sound insulating material 14 such as a lead plate is provided on the underside thereof, and that underside is covered with an outer plate 14a. Furthermore, the front edge 7a' of the plate 7a is slightly inclined downwardly.

The vestibule diaphragm-side gangway footplate, i. e., the second gangway footplate member 8, has a front portion which overlaps the front portion of the first gangway footplate member 7. In addition, the second gangway footplate member includes a base plate 15 and two gap closing plates 16, 17 connected to the front portion of the base plate. In other words, the front edge portion of the base plate 15 has a central portion A' and inclined portions A, A extending from the vicinity of the central portion toward the lateral ends and the proximal end (namely, laterally upwardly as viewed in Fig. 1). Each of the gap closing plates 16, 17 has an inclined edge portion substantially aligned or complementary with the respective inclined portions A, A. Furthermore, the gap closing plates 16, 17 are connected to the base plate 15 by means of a horizontal rotary shaft 20 such as to be vertically rotatable, with the aforementioned edges substantially aligned with the inclined portions A, A and with the edge portion of the free end overlapped with the front portion of the first gangway footplate member 7. The proximal edge of the second gangway footplate member 8, i. e., the proximal edge of the base plate 15, is supported by the horizontal rotary shaft 19 such as to be vertically rotatable with respect to a hinge 18 secured to the free end-side metal frame 9 of the vestibule diaphragm structure 5. Moreover, the base plate 15 and the two gap closing plates 16, 17 are formed of a stainless steel plate, and slip-preventing projections 12 are formed on the front surface of each of these plates 15, 16, 17. On the rear surface of the base plate 15 is provided a heat insulating material 13, a sound insulating material 14, and an outer plate 14a, as in the case of the first gangway footplate member 7.

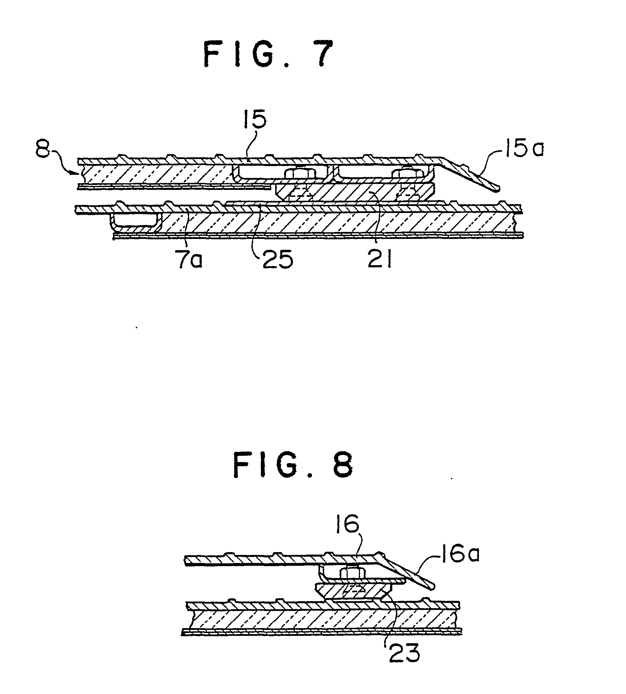

Incidentally, both the tip portions 15a, 16a of the base plate 15 and the gap closing plate 16 are somewhat inclined downwardly, which is also true of the gap closing plate 17. Reference numeral 21 denotes a sliding plate which is fixed to the underside of the central front portion of the base plate 15 by means of countersunk screws 22 and is formed of a synthetic resin material or the like. Reference numeral 23 denotes a sliding plate fixed to the undersides of the front portions of the two gap closing plates 16, 17, respectively, by means of countersunk screws and are formed of a synthetic resin material or the like. Reference numeral 25 denotes a sliding plate disposed on the upper surface of the central front portion of the plate 7a of the car-side gangway footplate member 7 and has an area extending over the moving range of the sliding plate 21. At the same time, as shown in Fig. 7, the projections 12 are not formed in that installation section, and the sliding plate 25 is formed to the same thickness as the height of the projections 12 and is fixed directly on the plate 7a of the car-side gangway footplate member 7.

The car-side gangway footplate member 7 thus formed is supported by the side of the car body while maintaining its predetermined horizontal state by means of the adjusting bolt 11. Meanwhile, as for the vestibule diaphragm-side gangway footplate member 8, its proximal end side is supported by the side of the vestibule diaphragm structure by means of the rotary shaft 19, and its tip is retained by being superposed on the car-side gangway footplate member 7 such as to be slidable thereon.

Incidentally, in Fig. 9, reference numerals 30, 31 denote side wall panels constituting the interconnecting passageway.

Next, description will be made of the operation of the present embodiment.

First, if one car body 4 is located on a horizontal track and the other car body 3 is located on a track provided with a cant or undergoes rolling, the vestibule diaphragm-side gangway footplate member 8 is maintained in a horizontal state, while the car-side gangway footplate member 7 is inclined, as shown in Fig. 2. Incidentally, the vestibule diaphragm-side gangway footplate member 8 is maintained in a horizontal state since the metal frames 9, 9 of the two vestibule diaphragm structures 5, 6 are pressed against and connected to each other. If the car-side gangway footplate member 7 is thus inclined, the gap closing plate 16 of the vestibule diaphragm-side gangway footplate member 8 on the lowered side is bent and lowered by following up the car-side gangway footplate member 7 by virtue of its own weight, around the rotary shaft 20 and at the position of the edge portion aligning with the inclined portion A of the tip portion of the base plate 15. For this reason, the front edge B of the gap closing plate 16 is brought into contact with the upper surface of the car-side gangway footplate member 7, while the side portion C of the front edge portion, which is bent rearwardly, i. e., extends upwardly and leftwardly as viewed in Fig. 1, is separated somewhat from the upper surface of the car-side gangway footplate member 7 particularly near the left end, as viewed in Fig. 1, of the side portion C. However, it may be said that the gap closing plate 16, as a whole, approaches the upper . surface of the car-side gangway footplate member 7.

Furthermore, the gap closing plate 17 of the vestibule diaphragm-side gangway footplate member 8 on the side where the car-side gangway footplate member 7 is raised follows the lifting of the car-side gangway footplate member 7, but the front edge portion B thereof and its side portion C are not separated substantially from the upper surface of the car-side gangway footplate member 7.

Next, when the two car bodies 3, 4 pass along a curved track, the two gangway footplate members 7, 8 follow up the curved track by sliding in a planar manner with respect to each other depending on the degree of the curvature. Additionally, when a car undergoes pitching, the two gangway footplate members 7, 8 follow up the pitching by virtue of the vertical motion thereof as well as the vertical motion of the gap closing plates 16, 17.

In addition, at the time when the two gangway footplate members 7, 8 slide in a planar manner with respect to each other as the cars pass along a curved track, as described above, it is possible to effect smooth sliding by means of the sliding plates 21, 25 and 23 provided on the vestibule diaphragm-side gangway footplate member 8. During this sliding, there are cases where a number of passengers get on the base plate 15 of relatively large area of the vestibule diaphragmside gangway footplate member 8. However, since the car-side gangway footplate member 7 is also provided with the sliding plate 25, it becomes possible to effect favorable sliding even if a large load is applied, and, moreover, it becomes possible to prevent the wear of the sliding plate 21. There are few cases where a number of passengers get on the gap closing plates 16, 17 in view of their relatively small areas, so that even if the sliding plate 23 is slided directly on the projections 12 of the car-side gangway footplate member 7, the amount of wear of the sliding plate 23 is small.

In addition, if a sliding plate corresponding to the sliding plate 23 is provided on the car-side gangway footplate member 7, that sliding plate is exposed to the outside during the passing of the cars along a curved track and the external appearance becomes poor, so that a sliding plate is not provided on the car-side gangway footplate member 7.

Incidentally, in the aforementioned embodiment, the vestibule diaphragm device is of the type split into two parts including the first and second vestibule diaphragm structures, and a gangway footplate apparatus split into two parts (i. e., the first and second gangway footplate members) is provided to each vestibule diaphragm structure. However, in the case where the interval between car bodies to be coupled is small, the same operation and advantages can be obtained even if the first gangway footplate member 7 is coupled directly with one car body or a portion formed integrally therewith and the other gangway footplate member 8 is coupled directly with the other car body or a portion formed integrally therewith.

In addition, if the two gangway footplate members 7, 8 are provided with sound- and heat-insulating materials, as shown in the illustrated embodiment, the noise and heat emitted from the coupler can be shut off, thereby improving the passengers'comfort in the interconnecting passageway.

As described above, according to the present invention, since the overlapping portion of the two gangway footplate members does not open wide even during the rolling, in particular, of the car bodies, there is no danger of a passenger's foot becoming caught by the opening. Thus the present invention has an advantage in that it is capable of contributing to the passenger safety.

## Claims

1. A gangway footplate apparatus disposed in an interconnecting passageway formed between coupled car bodies, comprising a first gangway footplate member (7) including a single plate (7a) having a proximal portion which is coupled with one car body (3) of said car bodies (3, 4) such as to be vertically rotatable, said first gangway footplate member (7) being maintained substantially horizontally during normal operation, and a second gangway footplate member (8) having a proximal portion coupled with the other car body (4) such as to be vertically rotatable and a front portion superposed on the front portion of said first gangway footplate member (7), characterised in that : said second gangway footplate member (8) includes a base plate (15) having the proximal portion and a front edge portion, said front edge portion having a central portion (A') and inclined portions (A) on both sides thereof extending from the vicinity of said central portion (A') laterally and toward said proximal portion, and a pair of gap closing plates (16, 17) each having one end connected to one of said inclined portions (A) of said base plate (15) such as to be vertically rotatable, said gap closing plates (16, 17) being superposed on said front portion of said first gangway footplate member (7).

2. A gangway footplate apparatus according to Claim 1, further comprising a first vestibule diaphragm structure (5) having one end connected to said one car body (3), and a second vestibule diaphragm (6) having one end connected to said other car body (3) and the other end arranged to be connected to the other end of said first vestibule diaphragm (5) when said two car bodies (3, 4) are coupled, said proximal portion of said first gangway footplate member (7) being connected to said one car body (3), while said proximal portion of said second gangway footplate member (8) being connected to said other end of said first vestibule diaphragm structure (5), said second gangway footplate member (8) being connected to said other car body (4) via said two vestibule diaphragm structures (5, 6).

3. A gangway footplate apparatus according to Claim 1, wherein said two gangway footplates (7, 8) include sound- and heat-insulating materials.

## Patentansprüche

1. Gangbodenplatten-Einrichtung in einem zwischen gekoppelten Wagenkästen gebildeten Verbindungsgang, umfassend ein erstes Gangbodenplatten-Element (7), das eine einzelne Platte (7a) mit einem vertikal schwenkbar mit einem (3) der Wagenkästen (3, 4) gekoppelten proximalen Teil aufweist und im Normalbetrieb im wesentlichen horizontal gehalten ist und ein zweites Gangbodenplatten-Element (8), das einen vertikal schwenkbar mit dem anderen Wagenkasten (4) gekoppelten proximalen Teil und einen den vorderen Teil des ersten Gangbodenplatten-Elements (7) überlagernden vorderen Teil aufweist, dadurch gekennzeichnet, daß das zweite Gangbodenplatten-Element (8) eine Grundplatte (15) mit einem proximalen Teil und einem Vorderkantenteil, das einen Mittelabschnitt (A') und an dessen beiden Seiten von der Umgebung des Mittelabschnitts (A') seitlich und in Richtung des proximalen Teils verlaufende geneigte Abschnitte (A) umfaßt, sowie ein Paar von Lückenschließplatten (16, 17) aufweist, deren jede mit einem Ende mit den geneigten Abschnitten (A) der Grundplatte (15) vertikal verschwenkbar verbunden ist und die den vorderen Teil des ersten Gangbodenplatten-Elements (7) überlagern.

2. Gangbodenplatten-Einrichtung nach Anspruch 1, ferner umfassend eine erste Plattform-Balganordnung (5), deren eines Ende mit dem einen Wagenkasten (3) verbunden ist, und eine zweite Plattform-Balganordnung (6), deren eines Ende mit dem anderen Wagenkasten (3) verbunden und deren anderes Ende beim Koppeln der beiden Wagenkästen (3, 4) mit dem anderen Ende der ersten Plattform-Balganordnung (5) verbindbar ist, wobei der proximale Teil des ersten Gangbodenplatten-Elements (7) mit dem einen Wagenkasten (3) verbunden ist, während der proximale Teil des zweiten Gangbodenplatten-Elements (8) mit dem anderen Ende der ersten Plattform-Balganordnung (5) verbunden ist, und wobei das zweite Gangbodenplatten-Element (8) über die beiden Plattform-Balganordnungen (5, 6) mit dem anderen Wagenkasten (4) verbunden ist.

3. Gangbodenplatten-Einrichtung nach Anspruch 1, wobei die beiden Gangbodenplatten (7, 8) Schall- und Wärmeisoliermaterialien enthalten.

## Revendications

1. Passerelle d'intercirculation placée dans un passage d'interconnexion formé entre des caisses de voiture accouplées ou attelées, comprenant un premier élément de passerelle (7) incluant une seule plaque (7a) ayant une partie proximale qui est reliée avec l'une (3) desdites caisses de voiture (3, 4) de manière à être pivotante verticalement, ledit premier élément de passerelle (7) étant maintenu sensiblement horizontal en fonctionnement normal, et un second élément de passerelle (8) ayant une partie proximale reliée avec l'autre caisse de voiture (4) de manière à être pivotante verticalement et une partie avant superposée à la partie avant dudit premier élément de passerelle (7), caractérisée en ce que ledit second élément de passerelle (8) comporte une plaque de base (15) ayant la partie proximale et une partie d'extrémité avant ayant une partie centrale (A') et des parties inclinées (A) des deux côtés de celle-ci s'étendant depuis le voisinage de ladite partie centrale (A') latéralement et vers ladite partie proximale, et une paire de plaques d'obturation d'espacement (16, 17) ayant chacune une extrémité reliée à l'une desdites parties inclinées (A) de ladite plaque de base (15) de manière à être pivotante verticalement, lesdites plaques (16, 17) étant superposées sur la partie avant dudit premier élément de passerelle (7).

2. Passerelle d'intercirculation selon la revendication 1, comprenant également une première structure à soufflet d'intercirculation (5) ayant une extrémité reliée avec ladite une caisse de voiture (3), et une seconde structure à soufflet d'intercirculation (6) ayant une extrémité reliée à ladite autre caisse de voiture (4) et l'autre extrémité étant conçue pour être reliée à l'autre extrémité de ladite première structure à soufflet d'intercirculation (5) lorsque les deux caisses de voiture (3, 4) sont accouplées, ladite partie proximale du premier élément de passerelle (7) étant reliée à ladite une caisse de voiture (3), alors que ladite partie proximale du second élément de passerelle (8) est reliée à ladite autre extrémité de la première structure à soufflet d'intercirculation (5), ledit second élément de passerelle (8) étant relié à ladite autre caisse de voiture (4) par l'intermédiaire des deux structures à soufflet d'intercirculation (5, 6).

3. Passerelle d'intercirculation selon la revendication 1, dans laquelle lesdits deux éléments de passerelle (7, 8) incluent des matériaux d'isolation thermique et phonique.

# FIG. 1

# FIG. 2

# FIG. 3

# FIG. 4

# FIG. 5

# FIG. 6

2

# FIG. 7

# FIG. 8

# FIG. 9

# FIG. 10

# FIG. 11

4